# EUROPÄISCHE PATENTSCHRIFT

(11) **EP 3 130 940 B1**
(45) Veröffentlichungstag und Bekanntmachung des Hinweises auf die Patenterteilung: **14.10.2020**
(21) Anmeldenummer: 16179319.5
(22) Anmeldetag: 13.07.2016
(51) Int. Cl.: G01S 13/931, G01S 7/40, G01S 13/87

(54) **VERFAHREN ZUR LEISTUNGSVERBESSERUNG EINES AUF HALBLEITERTECHNOLOGIE BASIERENDEN RADARSENSORS IN EINEM KRAFTFAHRZEUG UND KRAFTFAHRZEUG**
METHOD FOR IMPROVING THE PERFORMANCE OF A RADAR SENSOR BASED ON SEMICONDUCTOR TECHNOLOGY IN A MOTOR VEHICLE AND MOTOR VEHICLE
PROCEDE D'AMELIORATION DE LA PERFORMANCE D'UN CAPTEUR RADAR BASE SUR LA TECHNOLOGIE DES SEMI-CONDUCTEURS DANS UN VEHICULE AUTOMOBILE ET VEHICULE AUTOMOBILE

(30) Priorität: 13.08.2015 DE 102015010530
(43) Veröffentlichungstag der Anmeldung: 15.02.2017
(73) Patentinhaber: AUDI AG, 85045 Ingolstadt (DE)
(72) Erfinder: Khlifi, Rachid, 85748 Garching (DE)

(56) Entgegenhaltungen:
- EP-A1- 2 009 462
- EP-A1- 2 458 400
- WO-A1-2010/097136
- DE-A1- 19 813 631
- DE-A1-102004 024 695
- DE-A1-102010 002 759
- GB-A- 2 386 256
- JRI LEE ET AL: "A Fully-Integrated 77-GHz FMCW Radar Transceiver in 65-nm CMOS Technology", IEEE JOURNAL OF SOLID-STATE CIRCUITS, Bd. 45, Nr. 12, 1. Dezember 2010 (2010-12-01), Seiten 2746-2756, XP055088008, ISSN: 0018-9200, DOI: 10.1109/JSSC.2010.2075250

## Beschreibung

Die Erfindung betrifft ein Verfahren zur Leistungsverbesserung eines auf Halbleitertechnologie basierenden Radarsensors, welcher in einem Kraftfahrzeug hinter einem zu durchstrahlenden Bauteil verbaut ist, sowie ein Kraftfahrzeug.

Die Verwendung von Radarsensoren in Kraftfahrzeugen ist im Stand der Technik bereits weitgehend bekannt. Radarsensoren werden heutzutage meist als Umfeldsensoren für einen mittleren und größeren Distanzbereich eingesetzt, um andere Verkehrsteilnehmer oder größere Objekte in Distanz, Winkel und Relativgeschwindigkeit bestimmen zu können. Derartige Radardaten können in Umfeldmodelle eingehen oder auch unmittelbar Fahrzeugsystemen zur Verfügung gestellt werden. Nutzen aus Radardaten ziehen im bekannten Stand der Technik Fahrerassistenzsysteme, beispielsweise Längsführungssysteme, wie ACC, oder auch Sicherheitssysteme.

Radarsensoren herkömmlicher Bauart weisen meist eine größere Ausdehnung auf und sind eher klobig, nachdem die Antennen sowie die unmittelbar an der Antenne benötigten Elektronikkomponenten, also das Radar-Frontend, in einem Gehäuse integriert sind. Hauptsächlich bilden die Elektronikkomponenten dabei den Radar-Transceiver, der eine Frequenzsteuerung (üblicherweise umfassend eine Phasenregelschleife - PLL), Mischeinrichtungen, einem Low Noise Amplifier (LNA) und dergleichen enthält, oft werden jedoch auch Steuermodule und digitale Signalverarbeitungskomponenten antennennah realisiert, beispielweise um bereits aufbereitete Sensordaten, beispielsweise Objektlisten, auf einen angeschlossenen Bus, beispielsweise einen CAN-Bus, geben zu können.

Die Realisierung von Radarkomponenten auf Halbleiterbasis erwies sich lange Zeit als schwierig, da teure Spezialhalbleiter, insbesondere GaAs, benötigt wurden. Es wurden kleinere Radarsensoren vorgeschlagen, deren gesamtes Radar-Frontend auf einem einzigen Chip in SiGe-Technologie realisiert ist, ehe auch Lösungen in der CMOS-Technologie bekannt wurden. Solche Lösungen sind Ergebnis der Erweiterung der CMOS-Technologie auf Hochfrequenzanwendungen, was oft auch als RF-CMOS bezeichnet wird. Ein solcher CMOS-Radarchip ist äußerst kleinbauend realisiert und nutzt keine teuren Spezialhalbleiter, bietet also vor allem in der Herstellung deutliche Vorteile gegenüber anderen Halbleitertechnologien. Eine beispielhafte Realisierung eines 77 GHz-Radar-Transceivers als ein CMOS-Chip ist in dem Artikel von Jri Lee et al., "A Fully Integrated 77-GHz FMCW Radar Transceiver in 65-nm CMOS Technology", IEEE Journal of Solid State Circuits 45 (2010), S. 2746-2755, beschrieben.

Nachdem zudem vorgeschlagen wurde, den Chip und die Antenne in einem gemeinsamen Package zu realisieren, ist ein äußerst kostengünstiger kleiner Radarsensor möglich, der Bauraumanforderungen deutlich besser erfüllen kann und aufgrund der kurzen Signalwege auch ein sehr niedriges Signal-Zu-Rausch-Verhältnis aufweist sowie für hohe Frequenzen und größere, variable Frequenzbandbreiten geeignet ist. Daher lassen sich derartige, kleinbauende Radarsensoren auch für Kurzreichweiten-Anwendungen, beispielsweise im Bereich von 30 cm bis 10 m, einsetzen.

Es wurde auch bereits vorgeschlagen, einen solchen CMOS-Transceiver-Chip und/oder ein Package mit CMOS-Transceiver-Chip und Antenne auf einer gemeinsamen Leiterplatte mit einem digitalen Signalverarbeitungsprozessor (DSP-Prozessor) vorzusehen oder die Funktionen des Signalverarbeitungsprozessors ebenso in den CMOS-Transceiver-Chip zu integrieren. Eine ähnliche Integration ist für Steuerungsfunktionen möglich.

Die Existenz von äußerst kleinbauenden Radarsensoren in Halbleitertechnologie ermöglicht es, Radarsensoren im Kraftfahrzeug verdeckt hinter Bauteilen zu verbauen, beispielsweise in Türen und/oder Stoßfängern, wobei das abdeckende Bauteil dann durch die Radarstrahlung entsprechend durchstrahlt wird. Die Radarsensoren werden dabei von einem Hersteller, der sie bereits probeweise vermessen hat, geliefert und hinter dem Bauteil verbaut, wonach eine einzelne Kalibrierung aller in dem Kraftfahrzeug verdeckt verbauter Radarsensoren stattfindet, um die Toleranzen des Verbaus zu korrigieren. Im Rahmen von Applikationsfahrten werden die Schwellwerte/sonstigen Betriebsparameter für die Radardaten der einzelnen Radarsensoren optimiert und entsprechend im Kraftfahrzeug einprogrammiert.

Verändert sich nun die Einbauposition durch Temperatureinfluss, Alterungseffekte oder dergleichen, so sind die Betriebsparameter, die die Auswertung allgemein bzw. die Kalibrierung und/oder Schwellwerte betreffen können, nicht mehr korrekt. Dies kann zu einer Fehlfunktion der Radarsensoren bzw. zu Falsch- und Fehlwarnungen bei radarbasierten Fahrerassistenzsystemen führen. Um dem abzuhelfen, kann eine Rekalibrierung des Radarsensors fahrzeugspezifisch und radarsensorspezifisch vorgenommen werden, was jedoch einen hohen Aufwand und auch hohe Kosten zur Folge hat.

Diese Nachteile werden besonders deutlich, wenn die Zahl der innerhalb des Kraftfahrzeugs verwendeten Radarsensoren anwächst. So wurde beispielsweise vorgeschlagen, für eine Überwachung des gesamten Umfelds in einem 360°-Radius eine Vielzahl von Radarsensoren in dem Kraftfahrzeug zu verbauen, beispielsweise acht Radarsensoren, von denen drei im Frontstoßfänger, drei im hinteren Stoßfänger und zwei in den Seitentüren verbaut sind. Dies hat einen steigenden Kalibrierungsaufwand der einzelnen Radarsensoren zur Folge.

Ein weiteres wesentliches Problem für die Leistungsfähigkeit von Radarsensoren sind Störstellen im Umfeld des Sensors, beispielsweise starke Reflektoren in der unmittelbaren Nachbarschaft des Radarsensors. Dabei kann es sich um benachbarte weitere Sensoren, beispielsweise Ultraschallsensoren, handeln, denkbar ist es jedoch auch, dass in dem zu durchstrahlenden Bauteil Diskontinuitäten vorliegen, beispielsweise konstruktive Kunststoffrippen zur Verstärkung eines Stoßfängers. Auch können am zu durchstrahlenden Bauteil Designelemente, beispielsweise Chromleisten, vorgesehen sein. Im hinteren Bereich des Kraftfahrzeugs können Störungen beispielsweise durch eine Anhängerkupplung entstehen.

Störungen der Radarsensorfunktion können jedoch, wie bereits erwähnt, auch auftreten, wenn sich die Einbauposition der Radarsensoren relativ zur Umgebung, insbesondere dem Bauteil, verändert, was beispielsweise durch Temperatureinfluss, durch Alterung oder durch Deformation des Bauteils auftreten kann. Selbst wenn also der Radarsensor gezielt so verbaut wird, dass Störstellen in der Nachbarschaft des Radarsensors nicht im Erfassungsbereich des Radarsensors, also der Radarkeule, erfasst werden, kann durch eine Veränderung der Einbauposition ein Problem auftreten. Dabei sei angemerkt, dass insbesondere langfristige Veränderungen für die Leistungsfähigkeit des Radarsensors kritisch sind, da der Fahrer des Kraftfahrzeugs davon ausgeht, dass die Leistungsfähigkeit des Radarsensors dauerhaft erhalten bleibt bzw. gewährleistet wird.

Aus DE 10 2004 024 695 A1 ist eine Vorrichtung zur Detektion eines leistungsmindernden Belags auf einer Abdeckung eines Radarsystems eines Kraftfahrzeugs bekannt. Dabei wird eine Auswerteeinrichtung verwendet, welche ein aktuelles Signal aus einem die Abdeckung umfassenden Nahbereich des Radarsystems mit einem Referenzsignal desselben Nahbereichs bei einem störungsfreien Betrieb des Radarsystems vergleicht.

WO 2010/097136 A1 beschreibt die Erkennung einer Verschmutzung oder Vereisung eines einen Radarsensor umgebenden Radoms. Dabei wird aus der bei einer Messung bestimmten Winkelfitgüte auf eine Verschmutzung beziehungsweise eine Vereisung des Sensors geschlossen. Eine Erkennung von Vereisung oder daraus resultierender Winkelblindheit erfolgt durch Bildung eines Mittelwertes der gemessenen Winkelfitgüte von ausgewählten Signalen, wobei dieser Mittelwert der Winkelfitgüte zur Berechnung eines Indikators für Winkelblindheit und damit auch für Vereisung herangezogen wird.

In GB 2 386 256 A wird ein Verfahren zur Bestimmung einer Leistungsfähigkeit eines Radarsensors beschrieben, wobei die Detektion einer Schmutzschicht auf dem Radom dadurch erfolgt, dass von dieser Schicht reflektierte und vom Radarsensor empfangene Signale von anderen empfangenen Signalen unterschieden werden. Dadurch kann das Vorhandensein einer dämpfenden oder einer blockierenden Schicht auf dem Radom festgestellt werden und eine Aussage über den Grad der Dämpfung oder Reflektion der Schicht bestimmt werden.

Aus EP 2 009 462 A1 sind ein Verfahren und eine Vorrichtung zur Zustandserkennung eines an einem Kraftfahrzeug angeordneten Abstandssensors bekannt. Dabei werden ortsfeste Objekte am Fahrbahnrand detektiert, wobei das Entstehen eines Eisrings am Abstandssensor beim Verfolgen eines vorausfahrenden Fahrzeugs durch eine Speicherung der Winkelbereiche, unter denen die ortfesten Objekte noch erfasst werden können, ermittelt werden kann.

DE 10 2010 002 759 lehrt einen Radarsensor mit einem lokalen Oszillator zur Erzeugung eines Sendesignals mit einer Selbsttesteinrichtung, welche dazu ausgebildet ist, in einen Mischer des Radarsensors statt eines Teils des Sendesignals ein Testsignal einzuspeisen, welches gegenüber dem Sendesignal frequenzverschoben ist. Dadurch kann eine fehlerhafte Komponente im Signalpfad des Radarsensors detektiert werden.

EP 2 458 400 A1 beschreibt ein Verfahren zur Richtungspeilung mittels Monopulsbildung bei einem Radarsensor mit einer Phased-Array-Antenne. Dabei werden defekte Antennenelemente durch einen Selbsttest ermittelt und bei einer Abstrahlung über die Antenne berücksichtigt.

In DE 198 13 631 A1 wird ein Radar-Entfernungsmesser beschrieben, welcher zur Durchführung einer Entfernungsmesser-Kalibrierung ausgebildet ist. Dazu wird eine im Inneren eines Radoms des Radar-Entfernungsmessers angeordnete Hornantenne angestrahlt, deren zurückgestrahltes Signal als Referenz für die Entfernungsmesser-Kalibrierung herangezogen wird.

Der Erfindung liegt daher die Aufgabe zugrunde, insbesondere auf die Lebensdauer betrachtet die Leistungsfähigkeit von auf Halbleitertechnologie basierenden Radarsensoren, die hinter einem zu durchstrahlenden Bauteil verbaut sind, zu verbessern bzw. zu erhalten.

Zur Lösung dieser Aufgabe ist erfindungsgemäß ein Verfahren gemäß Anspruch 1 vorgesehen.

Der Erfindung liegt mithin die Idee zugrunde, die Radardaten selbst auszuwerten, um Störungen im Umfeld der Einbauposition bzw. bezüglich der Einbauposition feststellen zu können. Dies ist mit auf Halbleitertechnologie, insbesondere CMOS-Technologie, basierenden Radarsensoren, die auch im Nahbereich gute Erfassungseigenschaften aufweisen, möglich, so dass insbesondere genauere Informationen zur Art der Störung, also die Störinformation, gewonnen werden können, welche es erlauben, zielgerichtet Maßnahmen zu ergreifen, wenn ein Relevanzkriterium erfüllt ist, mithin beispielsweise keine hinreichende Verlässlichkeit der Radardaten mehr gegeben ist und dergleichen. Insbesondere werden also lokalisierbare, ultrakurzreichweitige Reflektionen an Kraftfahrzeugteilen im Umfeld des Radarsensors, insbesondere also von dem Bauteil, genutzt, um festzustellen, ob eine Störstelle vorliegt und/oder ob sich anhand erkennbarer Strukturen insbesondere des Bauteils eine Positionsveränderung des Radarsensors ergeben hat, die relevant sein könnte. Im Kraftfahrzeug wird mithin das Nahfeld des Radarsensors bewertet und die Störung lokalisiert.

Das Bauteil kann dabei, wie bereits angedeutet, ein Profilteil sein, insbesondere ein Stoßfänger. Gerade der Verbau von Radarsensoren in einem Stoßfänger wurde im Stand der Technik bereits vielfach vorgeschlagen, insbesondere bei kleinbauenden Radarsensoren auch deren Integration in das Stoßfängermaterial selbst. Gerade Stoßfänger als Profilteile weisen eine Vielzahl von Strukturen auf, die nicht zwangsläufig Störstellen bilden, aber zur Detektion beispielsweise einer Positionsveränderung auch grundsätzlich in den Radardaten des Radarsensors erkannt werden können. Störstellen können im Rahmen der vorliegenden Erfindung beispielsweise ein Profilmerkmal und/oder eine Diskontinuität sein.

Insgesamt nutzt das erfindungsgemäße Verfahren mithin die hohe Qualität der Radardaten, die von kleinbauenden, auf Halbleitertechnologie, insbesondere CMOS-Technologie, basierenden Radarsensoren auch im Ultranahfeld stammen, aus, um letztlich negative Effekte auf die Leistungsfähigkeit des Radarsensors aus den Radardaten selbst ableiten zu können, mithin die Radardaten ständig auf auftretende Störungen zu überwachen.

Konkret kann vorgesehen sein, dass zur Detektion von Störstellen anhand der Radardaten Reflektionszentren mit einem einen Abstandsschwellwert unterschreitenden Abstand von dem Radarsensor und/oder über einen vorgegebenen Mindestzeitraum kontinuierlich detektierbare Reflektionszentren identifiziert werden. Dabei ist es erfindungsgemäß vorgesehen, dass zur Klassifizierung als Störstelle ein Reflektionsstärkeschwellwert für die Reflektionsstärke überschritten ist. Wird mithin ein Reflektionszentrum festgestellt, das sich in unmittelbarer Nähe zum Radarsensor befindet, ist davon auszugehen, dass es sich hier nicht um ein Umfeldobjekt handelt, sondern um eine Störstelle, deren Daten ungewollt sind. Damit nicht kurzfristige Störstellen auf diese Weise fehlerhaft zu Maßnahmen führen können, kann als Zusatzbedingung vorgesehen sein, dass das Reflektionszentrum über einen vorgegebenen Mindestzeitraum kontinuierlich feststellbar sein muss, mithin als als baulicher Umstand zum Kraftfahrzeug gehörig erfasst werden kann. Nachdem von solchen Störstellen zum einen keine Radardaten erwünscht sind, zum anderen diese Radardaten auch eine hohe Auslastung bei der Auswertung zur Folge haben, ist es zweckmäßig, durch Maßnahmen die entstehenden Störungen zu beseitigen, worauf im Folgenden noch näher eingegangen werden wird.

Erfindungsgemäß ist vorgesehen, dass zur Ermittlung einer Positionsveränderung in den Radardaten detektierbare Strukturmerkmale des Bauteils und/oder eines weiteren, zum Radarsensor ortsfesten Bauteils lokalisiert werden. Um eine Positionsveränderung zu detektieren, wird mithin die Struktur des Nahfeldes des Radarsensors analysiert und gegebenenfalls auf Änderungen untersucht. Dabei können selbstverständlich Strukturmerkmale auch durch Störstellen gegeben sein bzw. umgekehrt, das bedeutet, verändert sich beispielsweise die Einbauposition des Radarsensors durch Deformierung des Bauteils relativ zu dem Bauteil, kann eine Störstelle, die bislang nicht im Erfassungsbereich des Radarsensors lag, nun in diesen hineingeraten, so dass sie mithin zum einen als Störstelle identifiziert werden kann, zum anderen aber auch zur Bestimmung einer Positionsveränderung herangezogen werden kann.

In konkreter Ausbildung der Relevanzbedingung ist vorgesehen, dass als Relevanzbedingung das Vorhandensein wenigstens einer Störstelle verwendet wird. Als zusätzliches Relevanzkriterium kann eine einen Positionsveränderungsschwellwert überschreitende Positionsveränderung verwendet werden. Ist also ein Reflektionszentrum aufgrund einer den Reflektionsstärkeschwellwert überschreitenden Reflektionsstärke als Störstelle klassifiziert worden, ist dies bereits ausreichend, nachdem die Relevanz ja implizit durch die Identifizierung als Störstelle bereits gegeben ist. Bezüglich der Positionsveränderung bietet sich ein ähnlicher Schwellwert, nämlich ein Positionsveränderungsschwellwert, an, um nur solche Positionsveränderungen tatsächlich durch Maßnahmen zu berücksichtigen, die eine hinreichende Einschränkung der Verlässlichkeit der Radardaten zur Folge haben.

Wie bereits erwähnt, nutzt die vorliegende Erfindung aus, dass moderne, auf Halbleitertechnologie basierende Radarsensoren, insbesondere auf CMOS-Technologie basierende Radarsensoren, eine gute Detektionsfähigkeit auch im (Ultra-)Nahfeld des Radarsensors aufweisen. In diesem Zusammenhang ist es besonders bevorzugt, wenn ein Radarsensor mit einem als Halbleiterchip, insbesondere CMOS-Chip, realisierten Radartransceiver verwendet wird. Um eine weitere kompakte, auch im Nahbereich die Radardatenqualität erhöhende Ausgestaltung zu erreichen, ist es ferner bevorzugt, wenn durch den Halbleiterchip auch eine Steuereinheit des Radarsensors und/oder eine digitale Signalverarbeitungskomponente des Radarsensors realisiert sind und/oder der Halbleiterchip gemeinsam mit einer Antennenanordnung des Radarsensors als ein Package realisiert ist. Derartige Radarsensoren können äußerst kleinbauend, beispielsweise mit einer Seitenlänge von kleiner als 1,5 cm für das Package, realisiert werden, so dass durch die kurzen Signalwege und die hochintegrierte Ausbildung Radardaten hoher Qualität, insbesondere auch im Nahfeld, erhalten werden.

In einer besonders bevorzugten Ausgestaltung der vorliegenden Erfindung werden die Maßnahmen automatisch innerhalb des Kraftfahrzeugs ausgeführt, so dass mithin eine Berücksichtigung der Störstelle bzw. Positionsveränderung ohne manuellen Eingriff innerhalb des Kraftfahrzeugs erfolgen kann. Während es dabei bevorzugt ist, als Maßnahme automatisch wenigstens einen Betriebsparameter des Kraftfahrzeugs anzupassen, ist es zusätzlich oder alternativ auch denkbar, dass der Radarsensor eine Einschränkung seiner Funktion meldet, so dass insbesondere gegebenenfalls fehlerhafte und/oder nicht interpretierbare Radardaten vermieden werden können. Zweckmäßigerweise kann im letztgenannten Fall vorgesehen sein, dass der Radarsensor bei Erfüllen eines eine für verwendbare Radardaten zu große Stärke der wenigstens einen Störstelle und/oder die Positionsveränderung beschreibenden Abschaltkriteriums den Messbetrieb einstellt und/oder nur noch als Empfänger wirkt. Es ist mithin beispielsweise denkbar, dass der Radarsensor ein eingeschränktes Systemverhalten meldet und in einen passiven Betriebsmodus übergeht. Denkbar ist es jedoch auch, wenngleich bevorzugt nur als letztmögliche Maßnahme, den Radarsensor zu deaktivieren, bis die Störstelle (insbesondere manuell) beseitigt wurde bzw. die Ausrichtung entsprechend korrigiert wurde.

In einer besonders bevorzugten Ausgestaltung der Erfindung ist jedoch vorgesehen, dass als Betriebsparameter der Erfassungsbereich zur Aussparung der wenigstens einen Störstelle und/oder zur Korrektur der Positionsveränderung angepasst wird und/oder die Sendeleistung zur Verringerung der Stärke der Reflektionen von der Störstelle erniedrigt wird und/oder ein Detektionsschwellwert zur Berücksichtigung eines erhöhten Rauschanteils erhöht wird. Das bedeutet, der Radarsensor stellt sich parameterspezifisch auf die Störstelle ein. Beispielsweise kann vorgesehen sein, dass der Winkel des Erfassungsbereichs automatisch angepasst wird, die gesendete Leistung reduziert wird, damit die Stärke der Reflektionen abnimmt, und dergleichen. Es ist also insbesondere möglich, durch "Beamforming" hinsichtlich der Radarkeule gezielt den Erfassungsbereich derart anzupassen, dass die Störstelle nicht angestrahlt wird. Hierzu kann insbesondere vorgesehen sein, dass zur Anpassung des Erfassungsbereiches ein Sendebetrieb von Sendeantennen und Empfangsantennen verwendet wird. Es ist mithin denkbar, einen speziellen "Beamforming-Modus" für die Antennenanordnung des Radarsensors zu aktivieren, in dem Sende- und Empfangsantennen kombiniert betrieben werden, um im Abstrahldiagramm die Störstelle zu umgehen. Korrekturen zur Positionsveränderung können neben einer Anpassung innerer Kalibrierungsparameter als Betriebsparameter selbstverständlich auch eine Veränderung des Erfassungsbereichs, beispielsweise als Reaktion auf eine Verkippung des Radarsensors eine entsprechende Verkippung der Radarkeule, zur Folge haben.

Betriebsparameter, die angepasst werden, können sich im Rahmen der Erfindung auf die Auswertung von Radardaten beziehen, beispielsweise indem Radardaten, die bekanntlich aus dem Bereich der Störstellte stammen, nicht bei der Auswertung berücksichtigt werden und dergleichen.

In diesem Kontext ist es besonders zweckmäßig, wenn die veränderten Betriebsparameter in Abhängigkeit wenigstens eines Teils der Störinformation und/oder einer aus der Störinformation abgeleiteten Radarsensorpositionsinformation aus mehreren Betriebsparametersätzen einer Look-Up-Tabelle ermittelt werden. Es ist mithin eine Look-Up-Tabelle vorgesehen, die insbesondere für alle denkbaren Störeffekte geeignete Betriebsparametersätze enthält, um den Betrieb des Radarsensors fortsetzen zu können, wobei eine geringstmögliche Beeinflussung durch die Störstelle bzw. Positionsveränderung gegeben ist. Hierzu sind insbesondere bestimmten Störstellen/Positionsveränderungen in der Look-Up-Tabelle Betriebsparametersätze zugeordnet, die diese Störstellen/Positionsveränderungen ideal berücksichtigen.

Die Betriebsparametersätze der Look-Up-Tabelle können aus einer Kalibrierungsmessung abgeleitet werden. Hierzu werden mithin die Radarsensoren in verschiedenen Einbaupositionen/Umgebungsbedingungen positioniert und es werden Radardaten aufgenommen, so dass eine entsprechende Klassifizierung und Einordnung möglich ist, wobei insbesondere mögliche Deformationstoleranzen und dergleichen berücksichtigt werden können.

Demgegenüber bevorzugt ist es jedoch, wenn die Betriebsparametersätze der Look-Up-Tabelle aus einer Simulation abgeleitet werden. Dabei kann insbesondere vorgesehen sein, dass im Rahmen der Simulation mögliche, bei Verwendung des Kraftfahrzeugs auftretende Positionsveränderungen der Verbauposition des Radarsensors, insbesondere aufgrund von Temperatureinflüssen und/oder mechanischen Einwirkungen, ermittelt werden, wobei für die so ermittelten möglichen Positionsveränderungen Betriebsparametersätze bestimmt werden, insbesondere wiederum durch Simulation. Nachdem die Einbauumgebung des Radarsensors und deren Eigenschaften gut bekannt sind, ist es mithin denkbar, durch eine geeignete Simulation der Umgebung mögliche Positionsänderungen, die grundsätzlich denkbar sind, zu ermitteln, zu denen dann, gegebenenfalls zusammengefasst zu bestimmten Intervallen, Betriebsparametersätze ermittelt werden können, wobei erneut die Kenntnis der Umgebung des Radarsensors nützlich ist. Beispielsweise können diesem Kontext Thermosimulationen und/oder Monte-Carlo-Simulationen durchgeführt werden.

Sowohl bei Kalibrierungsmessungen als auch bei Simulationen ist es mithin möglich, die Look-Up-Tabelle so zu gestalten, dass nur sinnvolle Positionsveränderungen/Störinformationen in ihr abgebildet werden, so dass mithin deren Größe überschaubar bleibt und dennoch für die realistischen Fälle geeignete Betriebsparametersätze zur Verfügung gestellt werden können.

Nichtsdestotrotz ist es durchaus denkbar, dass Positionsveränderungen/Störstellen auftreten, die einen sinnvollen Betrieb des Radarsensors, auch bei Veränderungen von Betriebsparametern, zu stark erschweren oder unmöglich machen. Gerade in diesem Kontext kann auch vorgesehen sein, dass als Maßnahme die Einbauposition des Radarsensors verändert und/oder eine Störstelle entfernt wird. Zwar ist es grundsätzlich denkbar, diesbezüglich Aktoren vorzusehen (Verstelleinrichtungen für die Radarsensoren, Reinigungseinrichtungen und dergleichen), in den meisten Fällen wird jedoch ein manuelles Verstellen bzw. Entfernen der Störstelle vorgenommen werden. Dabei kann selbstverständlich die Störinformation dennoch berücksichtigt werden, beispielsweise, um eine Information zur Art der Störung auszugeben oder gar eine Anweisung, wie der Radarsensor neu zu positionieren ist.

Gemäß der Erfindung ist vorgesehen, dass zur genaueren Bestimmung der Störinformation der Radarsensor nach der ersten Detektion einer Störstelle zur genaueren Vermessung der Störstelle in einem auf eine hohe Auflösung im Nahbereich abgestimmten Störstellenvermessungsmodus betrieben wird, wobei die im Störstellenvermessungsbetriebsmodus aufgenommenen Radardaten zur Verfeinerung der Störinformation ausgewertet werden. Wurde mithin eine Störstelle detektiert und klassifiziert, kann zur Ermittlung genauerer Störinformationen die Störstelle genauer vermessen werden. Hierzu wird die Frequenzbandbreite angepasst, um die Fokussierung in den Ultranahbereich zu verbessern. Sind benachbarte Radarsensoren vorhanden, die beide die Störstelle vermessen können, können deren Radardaten selbstverständlich auch fusioniert werden.

Ferner ist es vorteilhaft, wenn im Hinblick auf zusätzlich auftretende, temporäre Störstellen außerhalb des Kraftfahrzeugs eine Zusatzinformation ermittelt wird und bei einer vorliegenden temporären Störstelle wenigstens ein Betriebsparameter des Radarsensors zur Berücksichtigung der temporären Störstelle angepasst wird, insbesondere zur Reduzierung der zur Auswertung der Radardaten benötigten Rechenleistung. Das beschriebene Konzept zur Berücksichtigung von Störstellen am Kraftfahrzeug kann selbstverständlich auch auf außerhalb des Kraftfahrzeugs liegende Störstellen erweitert werden, um insbesondere Rechenaufwand und Rechenzeit bei der Auswertung der Radardaten einzusparen. Wird beispielsweise festgestellt, dass das Kraftfahrzeug derart geparkt ist, dass ständig ein Ast oder dergleichen in den Erfassungsbereich eines Radarsensors hineinragt, ist es nicht nötig, diesen ständig wieder zu detektieren und zu analysieren, da er ein unbewegtes Objekt im Umfeld des Kraftfahrzeugs ist, so dass beispielsweise auch hier der Erfassungsbereich angepasst werden kann, um die kraftfahrzeugexterne Störstelle auszusparen und dergleichen. Selbstverständlich ist es, wie auch im Rahmen der Behandlung von zum Kraftfahrzeug gehörenden Störstellen, denkbar, Radardaten aus einem bestimmten Bereich der Auswertung temporär zu entziehen und dergleichen.

Insbesondere sei darauf hingewiesen, dass gerade bei der Anpassung von Betriebsparametern im Fall einer Störstelle eine deutliche Leistungsverbesserung des Radarsensors im Hinblick darauf gewonnen wird, dass keine ständige, wiederholte Auswertung von die Störstelle betreffenden Radardaten erforderlich ist und somit der Auswertungsfokus deutlich mehr auf relevante, außerhalb der Störstelle liegende Radardaten gerichtet werden kann.

Neben dem Verfahren betrifft die Erfindung auch ein Kraftfahrzeug, aufweisend wenigstens einen Radarsensor, welcher in dem Kraftfahrzeug hinter einem zu durchstrahlenden Bauteil verbaut ist, und eine zur Durchführung des erfindungsgemäßen Verfahrens ausgebildete Steuereinrichtung. Sämtliche Ausführungen bezüglich des erfindungsgemäßen Verfahrens lassen sich analog auf das erfindungsgemäße Kraftfahrzeug übertragen, mit welchem mithin auch die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: ein erfindungsgemäßes Kraftfahrzeug,
- Fig. 2: einen Radarsensor,
- Fig. 3: den Radarsensor gemeinsam mit einem von ihm zu durchstrahlenden Bauteil, und
- Fig. 4: den Ablaufplan eines Ausführungsbeispiels des erfindungsgemäßen Verfahrens.

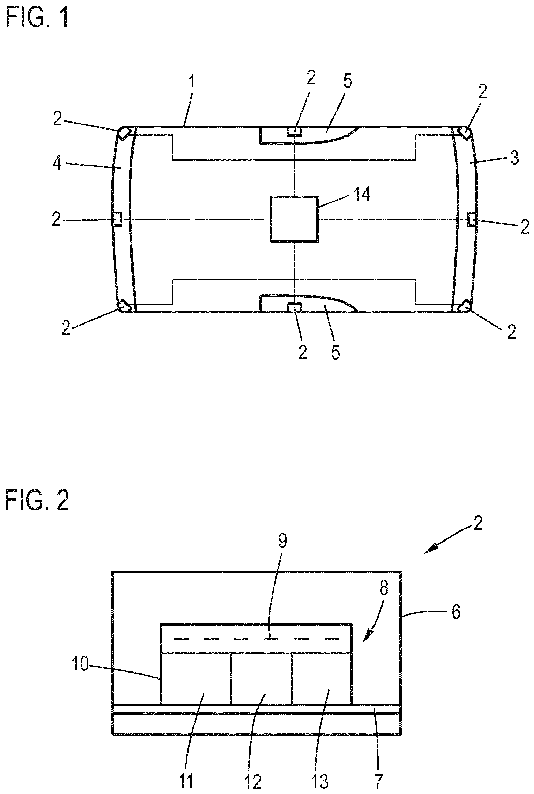

Fig. 1 zeigt eine Prinzipskizze eines erfindungsgemäßen Kraftfahrzeugs 1. Um das Umfeld des Kraftfahrzeugs 1 möglichst in einem 360°-Winkelbereich erfassen zu können, weist dieses acht in Halbleitertechnologie, hier CMOS-Technologie, realisierte Radarsensoren 2 auf. Die Radarsensoren 2 sind kleinbauend realisiert und verdeckt verbaut, so dass drei nach vorne ausgerichtete Radarsensoren 2 innerhalb des vorderen Stoßfängers 3, drei nach hinten messende Radarsensoren 2 innerhalb des hinteren Stoßfängers 4 und zwei seitlich erfassende Radarsensoren 2 innerhalb von Türen 5 des Kraftfahrzeugs 1 verbaut sind. Die Radarsensoren 2 durchstrahlen in ihrem Messbetrieb mithin jeweils ein Bauteil des Kraftfahrzeugs 1, beispielsweise im Fall der Stoßfänger 3, 4 ein Schließteil der jeweiligen Stoßfänger 3, 4, im Fall der in den Türen 5 verbauten Radarsensoren 2 ein speziell vorgesehenes, radardurchlässiges und überlackiertes Fensterelement.

Fig. 2 zeigt die kleinbauende Realisierung der Radarsensoren 2 genauer. Der dort gezeigte Radarsensor 2 umfasst ein Gehäuse 6, in dem eine Leiterplatte 7 gehaltert ist. Die Leiterplatte 7 trägt ein Package 8, das eine Antennenanordnung 9 sowie einen Halbleiterchip 10, hier einen CMOS-Chip, enthält. Der Halbleiterchip 10 realisiert neben einem Radartransceiver 11 auch eine digitale Signalverarbeitungskomponente 12 (DSP) sowie eine Steuereinheit 13 des Radarsensors 2. Diese kompakte, hochintegrierte Ausbildung des Radarsensors 2 ermöglicht es, auch im Ultranahbereich und Nahbereich sinnvolle, auswertbare Radardaten zu erhalten.

Vorliegend werden die Radardaten aller Radarsensoren 2, vgl. wiederum Fig. 1, in einem zentralen Steuergerät 14 gesammelt, das hier als Steuergerät eines zentralen Fahrerassistenzsystems realisiert ist und auch zur Durchführung des erfindungsgemäßen Verfahrens ausgebildet ist, auf das im Folgenden noch genauer eingegangen werden soll. Die Radardaten der Radarsensoren 2 finden dabei Eingang in ein zentrales Umfeldmodell, in dem im Kraftfahrzeug empfangene Umfelddaten zentral gesammelt werden und Funktionen verschiedener Fahrerassistenzsysteme zur Verfügung gestellt werden, die zumindest zum größten Teil auch im Steuergerät 14 realisiert sind.

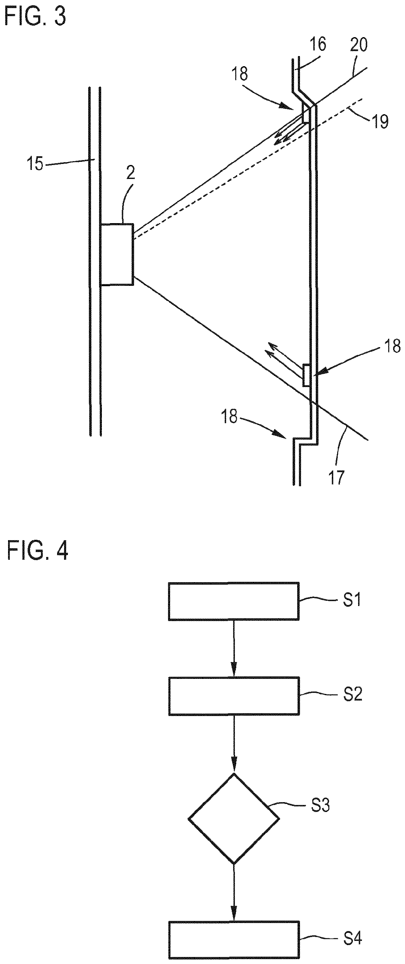

Fig. 3 zeigt nun einen Radarsensor 2, der innerhalb des vorderen Stoßfängers 3 verbaut ist. Ersichtlich besteht der Stoßfänger 3 aus einem Grundbauteil 15, an dem auch der Radarsensor 2 befestigt ist, und einem Schließteil 16, das das von dem Radarsensor 2 zu durchstrahlende Bauteil bildet, wie durch den Erfassungsbereich 17 angedeutet ist. Das Schließteil 16 ist ein Profilteil, welches mithin verschiedene Strukturmerkmale 18 aufweist, die teilweise auch im Erfassungsbereich 17 des Radarsensors 2 liegen können.

Vorliegend wurde die Einbauposition des Radarsensors 2 grundsätzlich so gewählt, dass allenfalls den verlässlichen Betrieb des Radarsensors 2 nicht störende strukturelle Merkmale 18, die also allenfalls schwache Reflektionszentren darstellen, innerhalb des Erfassungsbereichs 17 zu liegen kommen. Allerdings ist in der in Fig. 3 dargestellten Situation eine leichte Positionsveränderung des Radarsensors 2 aufgetreten, so dass der Erfassungsbereich nicht, wie gedacht, durch die gestrichelte Linie 19 begrenzt wird, sondern durch die durchgezogene Linie 20, weshalb ungewollt auch das am oberen Ende des Erfassungsbereichs 17 zu erkennende strukturelle Merkmal 18 erfasst wird, welches äußerst stark reflektiert. Nachdem durch die Reflektionsstärke dort ein Reflektionsstärkenschwellwert überschritten ist, wirkt es als eine Störstelle, die nutzlose Radardaten liefert, die jedoch einigen Auswertungsaufwand erfordern.

Mit der Detektion und Behandlung derartiger Störstellen/Positionsveränderungen befasst sich das erfindungsgemäße Verfahren, von dem ein Ausführungsbeispiel mit Hinblick auf Fig. 4 näher erläutert werden soll.

In einem Schritt S1 werden Radardaten der Radarsensoren 2 im üblichen Betrieb des Kraftfahrzeugs 1 aufgenommen und insbesondere auch bezüglich des zentralen Umfeldmodells ausgewertet. Eine besondere Auswertung wird im Schritt S2 durchgeführt. Dort werden die Radardaten jedes einzelnen Radarsensors 2 hinsichtlich von Störstellen und/oder einer Positionsveränderung analysiert, so dass schließlich eine Störinformation entsteht, die wenigstens eine Störstelle in dem durchstrahlten Bereich des Bauteils und/oder eine Positionsveränderung des Radarsensors 2 gegenüber der ursprünglichen Einbauposition beschreibt. Eine Störstelle wird dabei als vorhanden angesehen, wenn ein Reflektionszentrum in den Radardaten festgestellt wird, dessen Abstand einen Abstandsschwellwert für den Ultranahbereich unterschreitet. Beispielsweise können hier wenige Zentimeter angesetzt werden. Weitere Voraussetzungen, dass es sich bei einem Reflektionszentrum um eine Störstelle handeln kann, sind, dass das Reflektionszentrum über einen vorgegebenen Mindestzeitraum kontinuierlich detektierbar ist und die Reflektionsstärke einen Reflektionsstärkeschwellwert überschreitet, der so gewählt ist, dass tatsächlich die Auswertung bzw. den Nutzen von Radardaten störende Reflektionszentren, also Störstellen, von sonstigen Reflektionszentren, die Strukturmerkmale 18 beschreiben, unterschieden werden können.

Immer dann, wenn eine Störstelle als solche klassifiziert wurde, wird der entsprechende Radarsensor 2 kurzzeitig in einen Störstellenvermessungsmodus umgeschaltet, der eine hohe Auflösung im Ultranahbereich bietet, so dass die Störstelle genauer vermessen werden kann. Auf diese Weise kann die Störinformation genauer bestimmt werden.

Gerade im Fall von Profilteilen, wie dem Schließteil 16, existieren meist jedoch auch weitere Strukturmerkmale 18, die zwar in den Radardaten eines Radarsensors 2 detektiert werden können, die Messung jedoch nicht zu stark stören. Aus der räumlichen Anordnung solcher Strukturmerkmale 18, ermittelt aus den Radardaten, lässt sich eine Positionsveränderung des Radarsensors 2 ebenso feststellen; selbstverständlich gibt auch das Auftreten von tatsächlichen Störstellen in vielen Fällen jedoch einen Hinweis auf eine Positionsveränderung, die mithin gemeinsam mit dem Neuauftreten einer Störstelle vorhanden sein kann.

In einem Schritt S3 wird dann überprüft, ob ein Relevanzkriterium erfüllt ist, das die Störinformation auswertet. Vorliegend ist ein Relevanzkriterium dann erfüllt, wenn wenigstens eine Störstelle als solche klassifiziert wurde und/oder eine einen Positionsveränderungssteuerwert überschreitende Positionsveränderung vorliegt.

Bei erfülltem Relevanzkriterium werden in Schritt S4 Maßnahmen ergriffen. Welche Maßnahmen dies genau sind, hängt stark davon ab, ob der Radarsensor 2 weiter in der Lage ist, nützliche Radardaten zu liefern. Ist dies nicht der Fall, kann der Radarsensor 2 abgeschaltet werden oder in einen passiven Modus geschaltet werden, wobei dies selbstverständlich entsprechend an das Steuergerät 14 gemeldet wird.

In den meisten Fällen wird es jedoch denkbar sein, dass der Radarsensor 2 grundsätzlich noch sinnvolle und auswertbare Radardaten liefern kann, so dass als Maßnahme automatisch eine Anpassung von Betriebsparametern des Radarsensors 2 derart erfolgt, dass die Störstelle bzw. Positionsveränderung berücksichtigt wird. Die Betriebsparameter werden dabei in einer Betriebsparametersätze mit zugeordneten Störinformationen enthaltenden Look-Up-Tabelle ermittelt. Eine derartige Look-Up-Tabelle kann durch Kalibrationsmessungen ermittelt werden, bevorzugt ist es jedoch, wenigstens teilweise die Störinformationen mit zugeordneten Betriebsparametersätzen durch eine Simulation festzustellen. Nachdem die Verbauumgebung der Radarsensoren 2, inklusive des Bauteils, genau bekannt sind, ist es möglich, in einer Simulation vorherzusagen, welche möglichen Positionsveränderungen, beispielsweise durch thermische Effekte, auftreten können. Auch ist bekannt, wo in dem Bauteil oder sonstigen Teilen des Kraftfahrzeugs 1 mögliche Störstellen vorliegen, die dann nachteilige Effekte haben können. Auch geeignete Betriebsparameter für die theoretisch ermittelten Positionsveränderungen lassen sich im Rahmen von Simulationen bestimmen. So kann für realistische Störinformationen, wie sie tatsächlich auftreten können, die Look-Up-Tabelle mit begrenztem Speicherbedarf ermittelt werden.

Insbesondere zielt die Anpassung der Betriebsparameter als Maßnahme darauf ab, Beeinträchtigungen durch die Positionsveränderung und/oder die Störstelle möglichst gering zu halten. Beispielsweise kann der Erfassungsbereich zur Aussparung der wenigstens einen Störstelle angepasst werden, beispielsweise, indem gemäß Fig. 3 die gestrichelte Linie 19 den Erfassungsbereich 17 begrenzt statt der durchgezogenen Linie 20, so dass Reflektionen von dem als Störstelle wirkenden Strukturmerkmal 18 vermieden werden. Auch kann gegebenenfalls, wenn als Positionsveränderung der Radarsensor 2 verkippt ist, der Erfassungsbereich 17 entsprechend nachgekippt werden. Eine Anpassung kann auch hinsichtlich der Sendeleistung erfolgen, beispielsweise um die Reflektionsstärke von der Störstelle zu verringern. Auch hinsichtlich der Auswertung können Betriebsparameter angepasst werden, so dass beispielsweise Radardaten der Störstelle nicht weiteren Auswertungen zugeführt werden, um auf diese Art und Weise Auswertungsaufwand einzusparen. Ersichtlich sind eine Vielzahl von Möglichkeiten denkbar, bis hin zu speziell angepassten Erfassungsbereichen 17, wozu beispielsweise in einem Beamforming-Modus sowohl Sende- als auch Empfangsantennen der Antennenanordnung 9 genutzt werden, um spezielle Radarkeulen zu erzeugen.

Sind keinerlei sinnvolle Datenaufnahmen mit dem Radarsensor mehr möglich, können auch manuelle Maßnahmen vorgesehen werden, beispielsweise eine Neupositionierung des Radarsensors 2, für die Anweisungen und/oder Hinweise aus der Störinformation abgeleitet werden können.

## Patentansprüche

1. Verfahren zur Leistungsverbesserung eines auf Halbleitertechnologie basierenden Radarsensors (2), welcher in einem Kraftfahrzeug (1) hinter einem zu durchstrahlenden Bauteil verbaut ist,
**dadurch gekennzeichnet,**
**dass** aus Radardaten des Radarsensors (2) durch Lokalisierung einer Störung, wobei lokalisierbare, ultrakurzreichweitige Reflektionen an Strukturmerkmalen (18) von Kraftfahrzeugteilen im Umfeld des Radarsensors (2) genutzt werden und die Reflexionszentren darstellenden Strukturmerkmale (18) bei Überschreitung eines Reflektionsstärkeschwellwerts für die Reflektionsstärke als Störstelle klassifiziert werden, wenigstens eine eine Positionsveränderung des Radarsensors (2) gegenüber der ursprünglichen Einbauposition beschreibende Störinformation ermittelt wird und bei einer ein Relevanzkriterium, wobei als Relevanzkriterium die Klassifizierung eines Reflexionszentrums als Störstelle verwendet wird, erfüllenden Störinformation wenigstens eine Maßnahme zur Berücksichtigung der Positionsveränderung beim Betrieb des Radarsensors (2) ergriffen wird, wobei zur Ermittlung einer Positionsveränderung mehrere in den Radardaten detektierbare Strukturmerkmale (18) des Bauteils und/oder eines weiteren, zum Radarsensor (2) ortsfesten Bauteils lokalisiert werden, wobei zur genaueren Bestimmung der Störinformation der Radarsensor (2) nach der ersten Detektion einer Störstelle zur genauen Vermessung der Strukturmerkmale (18) in einem auf eine hohe Auflösung im Nahbereich abgestimmten Störstellenvermessungsmodus, in dem die Frequenzbandbreite angepasst wird, um die Fokussierung in den Ultranahbereich zu verbessern, betrieben wird, wobei die im Störstellenvermessungsmodus aufgenommenen Radardaten zur Verfeinerung der Störinformation ausgewertet werden.

2. Verfahren nach Anspruch 1,
**dadurch gekennzeichnet,**
**dass** das Bauteil ein Profilteil, insbesondere ein Stoßfänger (3, 4), ist und/oder die Störstelle ein Profilmerkmal und/oder eine Diskontinuität ist.

3. Verfahren nach Anspruch 1 oder 2,
**dadurch gekennzeichnet,**
**dass** zur Detektion von Störstellen anhand der Radardaten Reflektionszentren mit einem einen Abstandsschwellwert unterschreitenden Abstand von dem Radarsensor (2) und/oder über einen vorgegebenen Mindestzeitraum kontinuierlich detektierbare Reflektionszentren identifiziert werden.

4. Verfahren nach einem der vorangehenden Ansprüche,
**dadurch gekennzeichnet,**
**dass** ein Radarsensor (2) mit einem als Halbleiterchip (10), insbesondere CMOS-Chip, realisierten Radartransceiver (11) verwendet wird.

5. Verfahren nach Anspruch 4,
**dadurch gekennzeichnet,**
**dass** durch den Halbleiterchip (10) auch eine Steuereinheit (13) des Radarsensors (2) und/oder eine digitale Signalverarbeitungskomponente (12) des Radarsensors (2) realisiert sind und/oder der Halbleiterchip (10) gemeinsam mit einer Antennenanordnung (9) des Radarsensors (2) als ein Package (8) realisiert ist.

6. Verfahren nach einem der vorangehenden Ansprüche,
**dadurch gekennzeichnet,**
**dass** als Maßnahme automatisch wenigstens ein Betriebsparameter des Radarsensors (2) angepasst wird und/oder der Radarsensor (2) eine Einschränkung seiner Funktion meldet.

7. Verfahren nach Anspruch 6,
**dadurch gekennzeichnet,**
**dass** der Radarsensor (2) bei Erfüllen eines eine für verwendbare Radardaten zu große Reflektionsstärke der wenigstens einen Störstelle und/oder die Positionsveränderung beschreibenden Abschaltkriteriums den Messbetrieb einstellt und/oder nur noch als Empfänger wirkt.

8. Verfahren nach Anspruch 6 oder 7,
**dadurch gekennzeichnet,**
**dass** als Betriebsparameter der Erfassungsbereich (17) zur Aussparung der wenigstens einen Störstelle und/oder zur Korrektur der Positionsveränderung angepasst wird und/oder die Sendeleistung zur Verringerung der Stärke der Reflektionen von der Störstelle erniedrigt wird und/oder ein Detektionsschwellwert zur Berücksichtigung eines erhöhten Rauschanteils erhöht wird.

9. Verfahren nach einem der Ansprüche 6 bis 8,
**dadurch gekennzeichnet,**
**dass** die veränderten Betriebsparameter in Abhängigkeit wenigstens eines Teils der Störinformation und/oder einer aus der Störinformation abgeleiteten Radarsensorpositionsinformation aus mehreren Betriebsparametersätzen einer Look-Up-Tabelle ermittelt werden.

10. Verfahren nach Anspruch 9,
**dadurch gekennzeichnet,**
**dass** die Betriebsparametersätze der Look-Up-Tabelle aus einer Kalibrierungsmessung und/oder aus einer Simulation abgeleitet werden.

11. Verfahren nach Anspruch 10,
**dadurch gekennzeichnet,**
**dass** im Rahmen der Simulation mögliche, bei Verwendung des Kraftfahrzeugs (1) auftretende Positionsveränderungen der Verbauposition des Radarsensors (2), insbesondere aufgrund von Temperatureinflüssen und/oder mechanischen Einwirkungen, ermittelt werden, wobei für die so ermittelten möglichen Positionsveränderungen Betriebsparametersätze bestimmt werden, insbesondere wiederum durch Simulation.

12. Verfahren nach Anspruch 10 oder 11,
**dadurch gekennzeichnet,**
**dass** als Simulation eine Monte-Carlo-Simulation durchgeführt wird.

13. Verfahren nach einem der vorangehenden Ansprüche,
**dadurch gekennzeichnet,**
**dass** als Maßnahme die Einbauposition des Radarsensors (2) verändert und/oder eine Störstelle entfernt wird.

14. Verfahren nach einem der vorangehenden Ansprüche,
**dadurch gekennzeichnet,**
**dass** im Hinblick auf zusätzlich auftretende, temporäre Störstellen außerhalb des Kraftfahrzeugs (1) eine Zusatzinformation ermittelt wird und bei einer vorliegenden temporären Störstelle wenigstens ein Betriebsparameter des Radarsensors (2) zur Berücksichtigung der temporären Störstelle angepasst wird, insbesondere zur Reduzierung der zur Auswertung der Radardaten benötigten Rechenleistung.

15. Kraftfahrzeug (1), aufweisend wenigstens einen Radarsensor (2), welcher in dem Kraftfahrzeug (1) hinter einem zu durchstrahlenden Bauteil verbaut ist, und eine zur Durchführung eines Verfahrens nach einem der vorangehenden Ansprüche ausgebildete Steuereinrichtung (14).

## Claims

1. Method for improving the performance of a radar sensor (2), based on semiconductor technology, which is installed in a motor vehicle (1) behind a component to be irradiated,
**characterised in that**
from the radar data of the radar sensor (2), by localising an interference, wherein localisable, ultra-short-range reflections on structural features (18) of motor vehicle parts in the vicinity of the radar sensor (2) are used and structural features (18) representing the reflection centres are classified as an interference point if a reflection strength threshold value for the reflection strength is exceeded, at least one piece of interference information describing a change in position of the radar sensor (2) with respect to the original installation position is determined and, for a piece of interference information fulfilling a relevance criterion, wherein the classification of a reflection centre as an interference point is used as the relevance criterion, at least one measure is taken to take into account the change in position when the radar sensor (2) is operated, wherein, in order to determine a change in position, several structural features (18) of the component that can be detected in the radar data and/or of a further component that is stationary relative to the radar sensor (2) are localised, wherein, for the more precise determination of the interference information, the radar sensor (2) is operated after the first detection of an interference point for the precise measurement of the structural features (18) in an interference measurement mode matched to a high resolution in the close range, in which the frequency bandwidth is adjusted in order to improve focusing in the ultra-close range, wherein the radar data recorded in the interference measurement mode are evaluated to refine the interference information.

2. Method according to claim 1,
**characterised in that**
the component is a profile part, in particular a bumper (3, 4), and/or the interference point is a profile feature and/or a discontinuity.

3. Method according to claim 1 or 2,
**characterised in that**
for the detection of interference points, using the radar data, reflection centres with a distance from the radar sensor (2) which is below a distance threshold value are identified and/or reflection centres that can be continuously detected over a predetermined minimum period are identified.

4. Method according to any one of the preceding claims,
**characterised in that**
a radar sensor (2) with a radar transceiver (11) implemented as a semiconductor chip (10), in particular a CMOS chip, is used.

5. Method according to claim 4,
**characterised in that**
through the semiconductor chip (10) a control unit (13) of the radar sensor (2) and/or a digital signal processing component (12) of the radar sensor (2) are also implemented and/or the semiconductor chip (10) is implemented together with an antenna arrangement (9) of the radar sensor (2) as a package (8).

6. Method according to any one of the preceding claims,
**characterised in that**
as a measure at least one operating parameter of the radar sensor (2) is automatically adjusted and/or the radar sensor (2) reports a restriction in its function.

7. Method according to claim 6,
**characterised in that**
the radar sensor (2) stops the measurement operation and/or only acts as a receiver when a switch-off criterion is fulfilled, which describes a reflection strength of the at least one interference point, which is too great for usable radar data, and/or which describes the change in position.

8. Method according to claim 6 or 7,
**characterised in that**
the detection area (17) is adapted as an operating parameter to avoid the at least one interference point and/or to correct the change in position, and/or the transmission power is lowered to reduce the strength of the reflections from the interference point, and/or a detection threshold value is increased for taking into account an increased noise component.

9. Method according to any one of claims 6 to 8,
**characterised in that**
the changed operating parameters are determined as a function of at least part of the interference information and/or a piece of radar sensor position information derived from the interference information from a plurality of operating parameter sets of a look-up table.

10. Method according to claim 9,
**characterised in that**
the operating parameter sets of the look-up table are derived from a calibration measurement and/or from a simulation.

11. Method according to claim 10,
**characterised in that**
in the context of the simulation possible changes in position of the installation position of the radar sensor (2) that occur when using the motor vehicle (1), in particular due to temperature influences and/or mechanical influences, are determined, wherein operating parameter sets are determined for the possible changes in position thus determined, in particular again by simulation.

12. Method according to claim 10 or 11,
**characterised in that**
a Monte Carlo simulation is carried out as a simulation.

13. Method according to any one of the preceding claims,
**characterised in that**
as a measure, the installation position of the radar sensor (2) is changed and/or an interference point is removed.

14. Method according to any one of the preceding claims,
**characterised in that**
additional information is determined with regard to additionally occurring, temporary interference points outside the motor vehicle (1) and, if a temporary interference point is present, at least one operating parameter of the radar sensor (2) is adapted to take into account the temporary interference point, in particular to reduce the computing power required for evaluating the radar data.

15. Motor vehicle (1), having at least one radar sensor (2), which is installed in the motor vehicle (1) behind a component to be irradiated, and a control apparatus (14) designed to carry out a method according to any one of the preceding claims.

## Revendications

1. Procédé pour améliorer les performances d'un capteur radar (2) basé sur une technologie à semi-conducteur, lequel est utilisé dans un véhicule automobile (1) derrière un composant destiné à transmettre des rayons,
**caractérisé en ce que**,
à partir de données de radar du capteur radar (2) par localisation d'une perturbation, selon laquelle des réflexions localisables, à rayon d'action ultracourt, sur des caractéristiques de structure (18) d'éléments de véhicule automobile dans l'environnement du capteur radar (2), sont utilisées, et les caractéristiques de structure (18) représentant des centres de réflexion, en cas de dépassement d'une valeur de seuil d'intensité de réflexion pour l'intensité de réflexion, sont classées comme points perturbateurs, au moins une information de perturbation décrivant un changement de position du capteur radar (2) par rapport à la position d'installation initiale est établie, et en présence d'une information de perturbation satisfaisant un critère de pertinence, selon lequel la classification d'un centre de réflexion comme point perturbateur est utilisée comme critère de pertinence, au moins une mesure est prise pour prendre en considération le changement de position lors du fonctionnement du capteur radar (2), selon lequel, pour déterminer un changement de position, plusieurs caractéristiques de structure (18) du composant et/ou d'un autre composant fixe pour le capteur radar (2), détectables dans les données de radar, sont localisées, selon lequel, pour une détermination plus précise de l'information de perturbation, le capteur radar (2), après la première détection d'un point perturbateur, en vue du mesurage exact des caractéristiques de structure (18) dans un mode de mesurage de points perturbateurs concordant avec une résolution élevée dans la zone d'influence proche, dans lequel la largeur de bande de fréquences est adaptée, afin d'améliorer la focalisation dans la zone d'influence ultraproche, fonctionne, selon lequel les données de radar enregistrées dans le mode de mesurage de points perturbateurs sont évaluées pour affiner l'information de perturbation.

2. Procédé selon la revendication 1,
**caractérisé en ce que**
le composant est un élément de profil, en particulier un pare-chocs (3, 4) et/ou le point perturbateur est une caractéristique de profil et/ou une discontinuité.

3. Procédé selon la revendication 1 ou 2,
**caractérisé en ce que**,
pour la détection de points perturbateurs à l'aide des données de radar, des centres de réflexion avec une distance dépassant une valeur de seuil de distance du capteur de radar (2) et/ou des centres de réflexion détectables de manière continue pendant une période minimale prédéfinie sont identifiés.

4. Procédé selon l'une des revendications précédentes,
**caractérisé en ce**
**qu'**un capteur radar (2) est utilisé avec un émetteur-récepteur de radar (11) réalisé sous la forme d'une puce semi-conductrice (10), en particulier d'une puce CMOS.

5. Procédé selon la revendication 4,
**caractérisé en ce**
**qu'**une unité de commande (13) du capteur radar (2) et/ou un composant numérique de traitement de signal (12) du capteur radar (2) sont aussi réalisés par la puce semi-conductrice (10), et/ou la puce semi-conductrice (10) est réalisée conjointement avec un dispositif d'antenne (9) du capteur radar (2) sous la forme d'un ensemble (8).

6. Procédé selon l'une des revendications précédentes,
**caractérisé en ce que**,
comme mesure, au moins un paramètre de fonctionnement du capteur radar (2) est automatiquement adapté et/ou le capteur radar (2) signale une limitation de sa fonction.

7. Procédé selon la revendication 6,
**caractérisé en ce que**
le capteur radar (2), en cas de satisfaction d'un critère de déclenchement décrivant une trop grande intensité de réflexion du au moins un point perturbateur pour des données de radar utilisables et/ou le changement de position, règle le fonctionnement de mesure et/ou ne fonctionne plus que comme récepteur.

8. Procédé selon la revendication 6 ou 7,
**caractérisé en ce que**,
comme paramètre de fonctionnement, la zone de détection (17) est adaptée pour ne pas recouvrir le au moins un point perturbateur et/ou pour corriger le changement de position, et/ou la puissance d'émission est diminuée pour réduire l'intensité des réflexions du point perturbateur, et/ou une valeur de seuil de détection est augmentée pour tenir compte d'une composante de bruit accrue.

9. Procédé selon l'une des revendications 6 à 8,
**caractérisé en ce que**
les paramètres de fonctionnement modifiés sont établis, en fonction d'au moins une partie de l'information de perturbation et/ou d'une information de position de capteur de radar déduite de l'information de perturbation, à partir de plusieurs ensembles de paramètres de fonctionnement d'une table de recherche.

10. Procédé selon la revendication 9,
**caractérisé en ce que**
les ensembles de paramètres de fonctionnement de la table de recherche sont déduits d'une mesure d'étalonnage et/ou d'une simulation.

11. Procédé selon la revendication 10,
**caractérisé en ce que**,
dans le cadre de la simulation, de possibles changements de position de la position d'utilisation du capteur radar (2) apparaissant lors de l'utilisation du véhicule automobile (1), en particulier en raison d'influences de la température et/ou d'effets mécaniques, sont établis, selon lequel pour les changements de position possibles ainsi établis, des ensembles de paramètres de fonctionnement sont déterminés, en particulier de nouveau par simulation.

12. Procédé selon la revendication 10 ou 11,
**caractérisé en ce que**,
comme simulation, une simulation de Monte-Carlo est réalisée.

13. Procédé selon l'une des revendications précédentes,
**caractérisé en ce que**,
comme mesure, la position d'intégration du capteur radar (2) est modifiée et/ou un point perturbateur est éliminé.

14. Procédé selon l'une des revendications précédentes,
**caractérisé en ce que**,
en considération de points perturbateurs temporaires apparaissant en plus, hors du véhicule automobile (1), une information supplémentaire est établie et, en présence d'un point perturbateur temporaire, au moins un paramètre de fonctionnement du capteur radar (2) est adapté pour prendre en considération le point perturbateur temporaire, en particulier en vue de réduire la puissance de calcul nécessaire pour exploiter les données de radar.

15. Véhicule automobile (1), présentant au moins un capteur radar (2), lequel est utilisé dans le véhicule automobile (1) derrière un composant destiné à transmettre des rayons, et un appareil de commande (14) configuré pour exécuter un procédé selon l'une des revendications précédentes.
